Europäisches Patentamt

European Patent Office

Office européen des brevets

(11) Numéro de publication: **0 260 167 B1**

(12) **FASCICULE DE BREVET EUROPEEN**

(45) Date de publication de fascicule du brevet: **20.05.92** (51) Int. Cl.⁵: **B64D 1/06**

(21) Numéro de dépôt: **87401821.1**

(22) Date de dépôt: **06.08.87**

(54) **Dispositif de retenue ou de largage d'un fil d'armement de fusées de projectiles.**

(30) Priorité: **08.08.86 FR 8611500**

(43) Date de publication de la demande:
**16.03.88 Bulletin 88/11**

(45) Mention de la délivrance du brevet:
**20.05.92 Bulletin 92/21**

(84) Etats contractants désignés:
**BE DE ES GB IT**

(56) Documents cités:
**EP-A- 0 181 238**
**FR-A- 1 009 263**
**FR-A- 2 137 404**
**FR-A- 2 555 543**
**US-A- 3 807 784**

(73) Titulaire: **R. ALKAN & Cie.**
**Rue du 8 mai 1945**
**F-94460 Valenton(FR)**

(72) Inventeur: **Guitaut, Philippe**
**12 avenue Maréchal Davout**
**F-91800 Brunoy(FR)**
Inventeur: **Coutin, Pierre**
**117 avenue Général Michel Bizot**
**F-75012 Paris(FR)**

(74) Mandataire: **Hud, Robert**
**Cabinet COLLIGNON 6, rue de Madrid**
**F-75008 Paris(FR)**

Rank Xerox (UK) Business Services
(3.08/2.19/2.0)

## Description

L'invention concerne le largage de charges emportées sous avion et, plus particulièrement, le largage de projectiles comportant des fusées de mise à feu.

Certains projectiles, et les bombes d'aviation en particulier, comportent des fusées de mise à feu. L'armement de ces fusées est généralement obtenu par l'arrachement d'un fil de sécurité, lequel se termine par un anneau retenu par un déclencheur auxiliaire qui complète le dispositif principal de largage de la bombe.

Lors du largage de la bombe, on demande à ce déclencheur auxiliaire, soit de retenir l'anneau en réponse à une commande électrique et de provoquer de ce fait l'armement de la fusée correspondante, soit de libérer l'anneau dans le cas d'un tir inerte de la bombe. On doit pouvoir, avant le largage de la bombe, passer du tir actif au tir inerte et inversement, sans que l'anneau soit libéré.

Le document EP-A-0 181 238 décrit un dispositif de retenue et de largage d'un fil assurant l'armement de fusées de bombes. Ce dispositif comporte un levier pratiquement rectiligne pivotant sur un axe fixe et assurant une liaison cinématique entre un doigt coulissant retenant l'anneau du fil d'armement, un crochet d'encliquetage du dispositif coopérant avec un galet du levier et le mécanisme de déclenchement du déclencheur de bombe. Le crochet d'encliquetage maintient, sous l'action d'un électroaimant, le levier dans une position de retenue assurant le verrouillage du doigt coulissant. Lorsque l'électroaimant n'est pas excité, un ressort dégage le crochet d'encliquetage en libérant le doigt coulissant et l'anneau qu'il verrouille. Un organe pivotant, disposé à la partie supérieure du dispositif et dont l'axe cooopère avec un axe du déclencheur, agit sur le levier pour empêcher la libération du doigt coulissant tant que le déclencheur n'est pas déclenché.

Selon l'invention le dispositif de retenue ou de largage de l'anneau d'extrémité d'un fil, dont la retenue assure l'armement d'une charge larguée par un système d'emport associé, comprend un organe mobile assurant la retenue de l'anneau en cas d'action d'un électroaimant sur une armature mobile portée par un levier oscillant autour d'un axe fixe, l'extrémité du levier opposée à l'armature maintenant en ce cas le croc en position de fermeture à l'encontre d'un ressort de rappel, une came solidaire d'un axe étant conçue pour pousser le levier dans une position qui ramène l'armature à proximité immédiate de l'électroaimant lorsque ledit axe est relié en rotation mutuelle avec un axe du système d'emport, et il se caractérise en ce que l'organe mobile est un croc pivotant autour d'un axe, en ce que l'axe portant la came est disposé à la partie inférieure du dispositif de retenue ou de largage, en ce que le levier supporte un linguet articulé sur lui et pouvant être poussé par l'extrémité opposée à l'armature dudit levier pour dégager l'extrémité du linguet d'avec une face d'appui du croc lorsque le levier est rappelé par le ressort de rappel en cas d'inaction de l'électroaimant, et en ce qu'un ressort tend à ramener le linguet en position de maintien.

Le système d'emport et de largage de charge avec lequel le dispositif de retenue selon l'invention est conçu pour être associé peut être en particulier du type décrit dans le document FR-A-2 555 543.

Selon les conditions imposées par l'utilisateur le déclencheur auxiliaire, après coupure du courant d'alimentation de l'électro-aimant à la suite d'un largage actif, doit pouvoir soit retenir l'anneau, soit au contraire l'abandonner. Le dispositif objet de la présente invention permet l'un et l'autre de ces deux résultats par simple montage, ou non, d'une butée auxiliaire et de son ressort de rappel.

Pour bien faire comprendre le dispositif de l'invention on en décrira ci-après, à simple titre d'exemple sans caractère limitatif, une forme d'exécution préférée en référence au dessin schématique annexé dans lequel :

la figure 1 représente le dispositif selon l'invention en position d'attente avant un largage ;

la figure 2 est une coupe verticale prise selon la ligne II-II de la figure 1 ;

la figure 3 est une vue du dispositif dans sa position après réalisation d'un largage inerte ; et

la figure 4 est une vue du dispositif dans sa position après un largage actif.

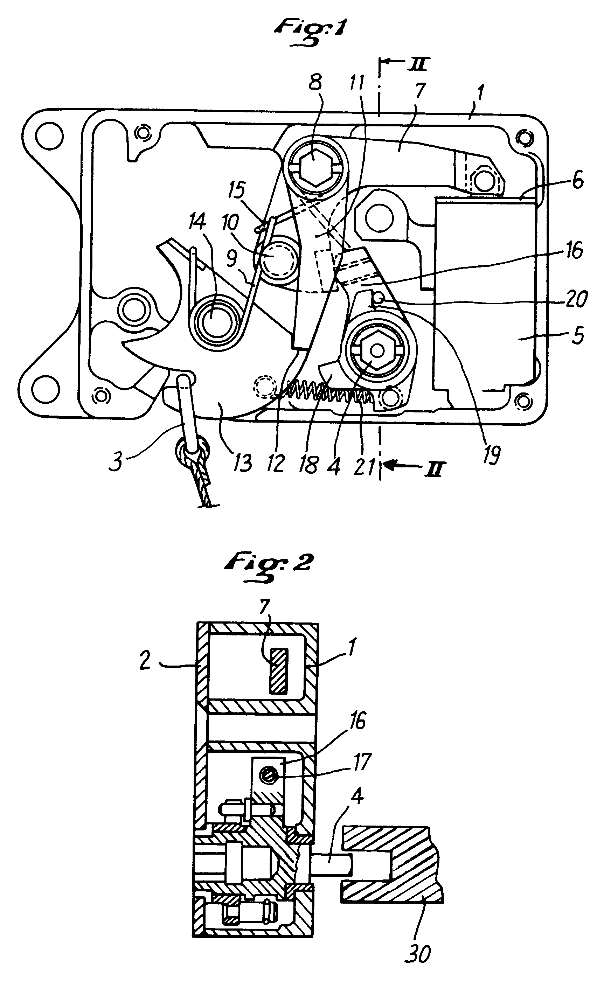

Le dispositif représenté au dessin est contenu dans un boîtier 1 fermé par un couvercle 2 et destiné à être plaqué sur un système de largage de charge, emporté par un aéronef et non figuré au dessin mais qui peut être par exemple du type décrit dans le brevet français N° 83.19401 publié sous le N° 2 555 543. Il peut coopérer avec un axe de ce système de largage, axe dont la rotation est déterminée par la mise en place de la charge et dont une manoeuvre manuelle éventuelle permet d'assurer en cas de besoin l'enclenchement en position d'emport des crochets de support de la charge largable. Cet axe est partiellement représenté à la figure 2 et est désigné par le chiffre de référence 30 (comme au dessin du brevet français N° 83. 19041).

Un fil ou câble souple lié à la charge se termine par un anneau 3 qui est retenu ou non par le déclencheur, selon que la charge doit être amorcée ou inerte.

Le dispositif comprend un axe prolongateur rotatif 4 dont une extrémité en tournevis s'engage dans une fente-tournevis de l'axe 30, (voir figure 2); Un électro-aimant 5, fixé dans le boîtier 1, présente une armature mobile 6 portée par un levier coudé 7 qui pivote sur un axe 8. L'armature 6 est relevée par un ressort 9, appuyant sur le levier 7, en cas d'absence de courant électrique dans l'électro-aimant 5 et dans ce cas l'anneau 3 sera libéré lors du largage de la charge, de la manière qui va être décrite.

Un doigt 10 porté par le levier coudé 7 agit contre un linguet 11, pivotant sur le même axe 8 et dont l'extrémité est susceptible d'engager une face d'appui 12 d'un croc 13 de retenue de l'anneau 3, ce croc 13 pivotant autour d'un axe 14 fixé dans le boîtier 1.

Le ressort 9 prend appui par une extrémité contre le doigt 10, dans le sens du dégagement du linguet 11 d'avec la face 12 du croc 13. L'autre extrémité du ressort 9 prend appui sur le croc 13 dans le sens d'ouverture de celui-ci et donc du largage de l'anneau 3. Un petit ressort 15 maintient normalement le linguet 11 au contact du doigt 10. La force du ressort 9 est telle qu'en l'absence de courant dans l'électro-aimant 5, il relève l'armature 6 et dégage le linguet 11 du croc 13, ce qui libère l'anneau 3 par ouverture de ce croc.

Ces actions sont toutefois rendues impossibles, tant que la charge est en position d'emport, au moyen d'une came 16 solidaire de l'axe prolongateur 4. Cette came 16 repousse en effet le levier 7 et en conséquence empêche l'armature 6 de s'écarter de l'électro-aimant 5, tandis que le linguet 11, n'étant pas poussé par le doigt 10, demeure engagé avec le croc 13 qui reste fermé en retenant l'anneau 3 (positions de la figure 1).

L'appui de la came 16, sur le levier 7, qui peut dépendre de divers jeux et en particulier de celui de l'engagement entre les axes 4 et 30, peut être réglé par une vis d'appui 17 montée dans la came 16 (figures 2 et 4). C'est alors l'extrémité de la vis 17 qui vient appuyer le levier 7 et non pas la came 16 elle-même. On remarquera que la came 16 et la vis d'appui 17 n'ont pas d'action directe sur le linguet 11, car leurs extrémités actives ne sont pas dans un même plan.

Lors du largage de la charge l'axe prolongateur 4, entraîné par l'axe 30, tourne dans le sens horaire en regardant la figure 1 et la came 16 (ou la vis 17) ne retient plus le levier 7.

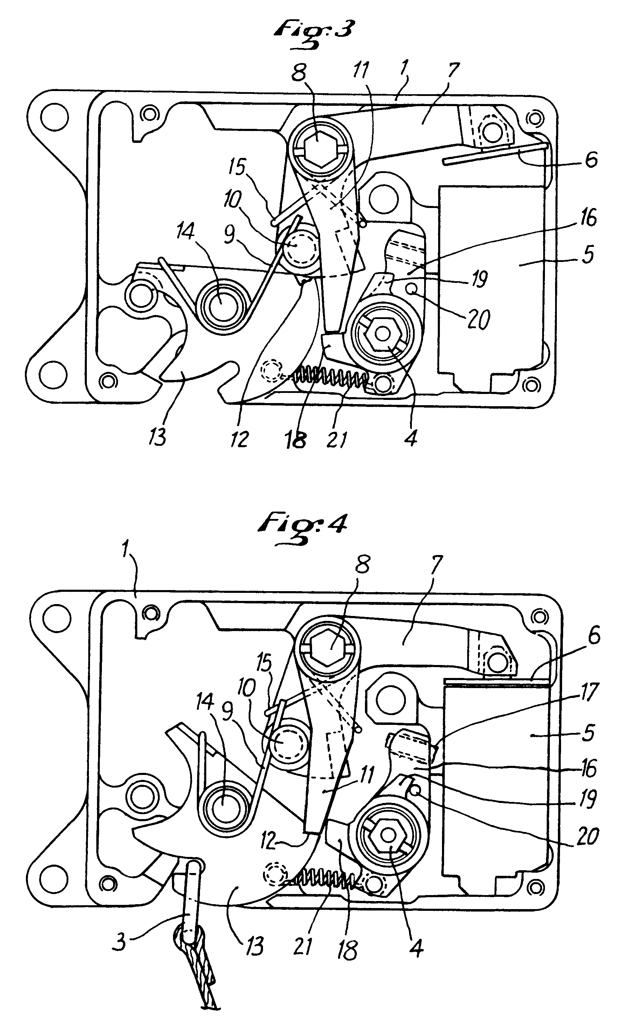

Dans un premier cas (largage inerte), en l'absence de courant électrique, l'électro-aimant 5 n'est pas excité. L'armature 6 se relève alors par la poussée du ressort 9 sur le doigt 10, lequel repousse le linguet 11 contre l'action du ressort 15, en dégageant ce linguet d'avec le croc 13 qui s'ouvre (pivotement dans le sens anti-horaire) sous l'action du même ressort 9. L'anneau 3 est largué et la charge n'est pas amorcée (ces positions sont celles de la figure 3).

On remarquera que le linguet 11 se dégage du croc 13 dès le début du mouvement de l'axe prolongateur 4, de sorte que l'anneau 3 est libéré avant la charge elle-même.

Dans un deuxième cas de fonctionnement (largage actif), l'électro-aimant 5 est excité par une impulsion électrique simultanée à celle qui commande le largage de la charge. Alors l'électro-aimant retient l'armature 6, malgré l'action du ressort 9, en retenant le croc 13 par l'intermédiaire du levier 7 et du linguet 11 toujours appuyé contre le doigt 10 par le ressort 15. La charge tombant, le croc 13 retient l'anneau 3 et le câble dont la traction arme la charge (positions représentées à la figure 4). Lorsque, après largage, le courant électrique est interrompu, l'anneau 3 est alors libéré comme dans le premier cas exposé plus haut, les positions des éléments du dispositif revenant alors à celles de la figure 3, la pièce repérée 18, non encore décrite, n'étant pas montée dans la version de l'invention décrite ci-dessus.

Dans les deux cas (largage inerte et largage actif) le réarmement du système de largage de la charge ramène l'armature 6 sur l'électro-aimant 5 par action de la came 16 dans le sens anti-horaire sur le levier 7, cependant que le croc 13 reste ouvert, sa face 12 restant dégagée du linguet 11.

Toutefois certains matériels exigent que l'anneau 3 reste retenu après le largage de la charge. Pour permettre un tel résultat le dispositif, dans une version complétée selon une variante, comprend en outre une butée 18 montée en rotation libre autour de l'axe prolongateur 4. Cette butée 18 comporte un bec d'appui 19 qui vient buter contre une partie saillante 20 de l'axe 4, sous l'action d'un ressort de traction 21. La butée 18, venant presqu'au contact du linguet 11, empêche celui-ci de libérer le croc 13 de sorte que l'anneau 3 est retenu même après interruption du courant électrique après largage de la charge (figure 4).

Lors du réarmement du croc de largage 13 par contre, par exemple lors de la mise en place d'une nouvelle charge, l'axe prolongateur 4 revient en position d'emport en tournant dans le sens anti-horaire. Lors de cette rotation la butée 18 est entraînée par la partie saillante 20 en libérant le linguet 11 et donc le croc 13 ce qui permet la chute de l'anneau 3 et la mise en place d'un nouvel anneau. Après quoi, en poussant celui-ci, on peut refermer sur lui le croc 13 que le linguet 11, rappelé par le ressort 15, vient verrrouiller en position de retenue de l'anneau 3.

Si, avec ce même matériel retenant l'anneau 3 après un largage actif, on procède à un largage inerte comme dans le premier cas cité plus haut, la butée 18 tournant dans le sens horaire vient au contact de l'extrémité du linguet 11 peu après que celui-ci se soit dégagé de la face 12 du croc 13 et elle se trouve alors retenue par ce linguet et son bec 19 se décolle de la partie saillante 20 lors de la fin du mouvement de l'axe prolongateur 4 (position représentée à la figure 3).

Un avantage important qu'apporte l'invention est donc que le montage ou non de la butée 18 permet de satisfaire, avec un même matériel, à des spécifications d'utilisation différentes.

Un autre avantage est sa liaison directe avec un axe tel que 30 d'un dispositif de largage de charge, ceci étant permis du fait que l'axe 4 se trouve placé à la partie inférieure du dispositif selon l'invention, lequel de ce fait ne dépasse pas en dessous du dispositif de largage et ainsi n'interfère pas avec la charge elle-même.

On comprendra que la description qui précède a été donnée à simple titre d'exemple, sans caractère limitatif, et que des adjonctions ou des modifications constructives pourraient y être apportées sans sortir du cadre de l'invention définie par les revendications annexées.

**Revendications**

1. Dispositif de retenue ou de largage de l'anneau (3) d'extrémité d'un fil dont la retenue assure l'armement d'une charge larguée par un système d'emport associé, comprenant un organe mobile (13) qui assure la retenue de l'anneau (3) en cas d'action d'un électroaimant (5) sur une armature mobile (6) portée par un levier (7) oscillant autour d'un axe fixe (8), l'extrémité du levier (7) opposée à l'armature (6) maintenant en ce cas l'organe (13) en position de fermeture à l'encontre d'un ressort de rappel (9), une came (16) solidaire d'un axe (4) étant conçue pour pousser le levier (7) dans une position qui ramène l'armature (6) à proximité immédiate de l'électroaimant (5) lorsque ledit axe (4) est relié en rotation mutuelle avec un axe (30) du système d'emport, caractérisé en ce que l'organe mobile (13) est un croc pivotant autour d'un axe (14), en ce que l'axe (4) portant la came (16) est disposé à la partie inférieure du dispositif de retenue ou de largage, en ce que le levier (7) supporte un linguet (11) articulé sur lui et pouvant être poussé par l'extrémité opposée à l'armature (6) dudit levier (7) pour dégager l'extrémité du linguet (11) d'avec une face d'appui (12) du croc (13) lorsque le levier (7) est rappelé par le ressort de rappel (9) en cas d'inaction de l'électroaimant (5), et en ce qu'un ressort (15) tend à ramener le linguet (11) en position de maintien.

2. Dispositif selon la revendication 1, caractérisé en ce que le linguet (11) est articulé sur l'axe (8) d'oscillation du levier (7) et en ce que l'extrémité du levier (7) opposée à l'armature (6) porte un doigt (10) destiné à engager le linguet (11) pour le pousser en position de dégagement.

3. Dispositif selon la revendication 1 ou la revendication 2, caractérisé en ce que le ressort (9) de rappel du levier (7) agit sur le croc (13) pour concourir à l'ouverture de celui-ci pour libérer l'anneau (3).

4. Dispositif selon l'une quelconque des revendications 1 à 3, caractérisé par une butée (18) coaxiale à l'axe (4) de support de la came (16) et conçue pour retenir le linguet (11) en butée contre la face d'appui (12) du croc (13) lorsque la came (16) ne maintient pas le levier (7) et que l'électro-aimant (5) est hors d'action.

5. Dispositif selon la revendication 4, caractérisé en ce que la butée (18) est en rotation libre autour de l'axe (4) de support de la came (16) et est maintenue en position de retenue du linguet (11) par un ressort (21), ladite butée (18) comportant un bec (19) pouvant être repoussé par une partie saillante (20) dudit axe (4) pour la mettre hors d'action sur le linguet (11).

**Claims**

1. Device for retaining or removing the ring (3) on the end of a wire, the retention of which arms a charge which is dropped by an associated carrying system, comprising a movable element (13) for retaining the ring (3) in the event of an electromagnet (5) acting on a movable frame (6) carried by a lever (7) oscillating about a fixed spindle (8), the end of the lever (7) opposite the frame (6) in this case maintaining the element (13) in the closed position against the effect of a return spring (9), a cam (16) integral with a spindle (4) being envisaged to push the lever (7) into a position which brings the frame (6) into the immediate proximity of the electromagnet (5) when the said spindle (4) is connected in mutual rotation with a spindle (30) of the carrying system, characterised in that the mobile element (13) is a hook pivoting about a spindle (14), in that the spindle (14) carrying the cam (16) is located on the lower part of the release or retention device, in that the lever (7) supports a catch (11) articulated thereon and may be pushed by the end (7) opposite the frame (6) of the said lever (7) to disengage the end of the catch (11) from a bearing face (12) of the hook (13) when the lever (7) is returned by the return spring (9) in the event of the electromagnet (5) being inactive, and in that a spring (15) tends to maintain the catch (11) in the retention position.

2.	Device according to Claim 1, characterised in that the catch (11) is articulated on the oscillation spindle (8) of the lever (7) and in that the end of the lever (7) opposite the frame (6) carries a finger (10) intended to engage the catch (11) to push this into the release position.

3.	Device according to Claim 1 or Claim 2, characterised in that the return spring (9) of the lever (7) acts on the hook (13) to urge the opening thereof to release the ring (3).

4.	Device according to any one of Claims 1 to 3, characterised by an abutment (18) coaxial with the spindle (4) carrying the cam (16) and designed to retain the catch (11) abutting against the bearing face (12) of the hook (13) when the cam (16) is not acting on the lever (7) and the electromagnet (5) is out of action.

5.	Device according to Claim 4, characterised in that the abutment (18) may rotate freely about the spindle (4) carrying the cam (16) and is maintained in a position of retaining the catch (11) by a spring (21), the said abutment (18) comprising a projection (19) which may be pushed back by a projecting part (20) of the said spindle (4) to render it inactive on the catch (11).

**Patentansprüche**

1.	Vorrichtung zum Zurückhalten oder Abwerfen des Ringes (3) am Ende eines Kabels, dessen Zurückhalten die Bestückung mit einer Ladung gewährleistet, die durch ein zugehöriges Mitnahmesystem ausgeklinkt wird, enthaltend ein bewegliches Teil (13), der den Ring (3) zurückhält bei Betätigung eines Elektromagneten (5) auf einer beweglichen Armatur (6), die von einem Hebel (7) getragen wird, der um eine feste Achse (8) schwenkbar ist, wobei das der Armatur (6) abgewandte Ende des Hebels (7) in diesem Fall das Teil (13) in Verschlußstellung gegenüber einer Rückführfeder (9) hält, wobei eine mit einer Achse (4) fest verbundene Steuerfläche (16) so ausgebildet ist, daß der Hebel (7) in eine Position gedrückt wird, in der die Armatur (6) in unmittelbare Nähe des Elektromagneten (5) geführt wird, wenn die Achse (4) mit einer Achse (30) des Mitnahmesystems zur gemeinsamen Drehbarkeit verbunden ist, dadurch gekennzeichnet, daß

das bewegliche Teil (13) als ein um eine Achse (14) schwenkbeweglicher Haken ausgebildet ist,

die die Steuerfläche (16) stützende Achse (4) im inneren Teil der Vorrichtung zum Zurückhalten oder Abwerfen angeordnet ist,

der Hebel (7) einen an ihm angeschlagenen Sperrhebel (11) trägt, der durch das der Armatur (6) abgewandte Ende des Hebels (7) gedrückt werden kann, um das Ende des Sperrhebels (11) von der Stützseite (12) des Hakens (13) zu befreien, wenn der Hebel (7) durch die Rückführfeder (9) im Falle der Entregung des Elektromagneten (5) zurückgeführt wird,

eine Feder (15) den Sperrhebel (11) in eine Halteposition zurückzuführen sucht.

2.	Vorrichtung nach Anspruch 1, dadurch gekennzeichnet, daß der Sperrhebel (11) schwenkbeweglich auf der Achse (8) angeschlagen ist, um die der Hebel (7) schwenkbar ist, und daß das der Armatur (6) abgewandte Ende des Hebels (7) einen Finger (10) trägt, der in Eingriff mit dem Sperrhebel kommt, um diesen in eine Freigabeposition zu drücken.

3.	Vorrichtung nach Anspruch 1 oder 2, dadurch gekennzeichnet, daß die Rückführfeder (9) des Hebels (7) auf den Haken (13) wirkt, um zu dessen Öffnung zwecks Freigabe des Ringes (3) beizutragen.

4.	Vorrichtung nach einem der Ansprüche 1 bis 3, gekennzeichnet durch einen Anschlag (18), der koaxial zu der die Steuerfläche (16) stützenden Achse (4) angeordnet ist und der so ausgebildet ist, daß der Sperrhebel (11) in Anlage an der Stützfläche (12) des Hakens (13) gehalten wird, wenn die Steuerfläche (16) den Hebel (7) nicht hält und der Elektromagnet (5) außer Wirkung ist.

5.	Vorrichtung nach Anspruch 4, dadurch gekennzeichnet, daß der Anschlag (18) frei um die die Steuerfläche (16) stützende Achse (4) drehbeweglich ist und in der den Sperrhebel (11) zurückhaltenden Position durch eine Feder (21) gehalten wird, wobei dieser Anschlag (18) eine Nase (19) enthält, die durch einen vorspringenden Teil (20) der Achse (4) zurückgestoßen werden kann, um ihn auf dem Sperrhebel außer Wirkung zu setzen.

## Fig.1

## Fig.2

**Fig. 3**

**Fig. 4**